# EUROPEAN PATENT SPECIFICATION

(11) **EP 3 931 274 B1**
(45) Date of publication and mention of the grant of the patent: **28.01.2026**
(21) Application number: 20714073.2
(22) Date of filing: 28.02.2020
(51) Int. Cl.: C09D 11/107

(54) **WATER-BASED PRIMERS**
GRUNDIERUNGEN AUF WASSERBASIS
APPRÊTS À BASE D'EAU

(30) Priority: 01.03.2019 US 201962812497 P
(43) Date of publication of application: 05.01.2022
(73) Proprietor: Sun Chemical Corporation, Parsippany, NJ 07054 (US)
(72) Inventor: MARSHALL, Bruce, Charlotte, NC 28273 (US); FLOYD, Benjamin, Charlotte, NC 28273 (US)
(74) Representative: Carpmaels & Ransford LLP
(86) International application number: PCT/US2020/020284
(87) International publication number: WO 2020/180644

(56) References cited:
- EP-A1- 1 482 010
- EP-A2- 0 725 111
- WO-A1-2008/094721
- WO-A1-2017/011236
- US-A- 5 373 048
- US-A1- 2003 087 989
- US-A1- 2006 074 181
- US-A1- 2007 224 435

## Description

### CROSS-REFERENCE TO RELATED APPLICATIONS

This application claims priority to U.S. Provisional Patent Application No. 62/812497, filed 01-March 2019.

### FIELD OF THE INVENTION

The present invention relates to a water-borne primer composition that facilitates adhesion of water-based printing inks to substrates on which the printing inks do not normally adhere well, such as low-treatment films having a low surface tension.

### BACKGROUND

Currently, solvent-based inks, coatings, and primers are used for low-treatment films, such as biaxially-oriented polypropylene (BOPP). Water-based inks, coatings, and primers typically do not adhere well to low-treatment films, and are thus avoided. However, solvent-based inks, coatings, and primers contain volatile solvents, and therefore produce higher volatile organic compound (VOC) emissions, which can be pollutants, and are generally considered undesirable. Previous attempts to use water-based inks, coatings, and primers have resulted in failure due to poor adhesion to the substrate.

To improve adhesion of water-based inks and coatings to low-treatment films, it is generally necessary to subject the films to a treatment such as corona discharge, plasma treatment, or chemical treatment to increase the surface tension of the substrate. Increasing surface tension of the film improves wettability (ability of the ink to spread on the surface) and adhesion of inks to the surface of the substrate. However, this entails an extra step in production, and is undesirable in terms of cost and time, and reduces productivity.

US 5,585,192 discloses a waterborne polyolefin adhesion promoter for use on plastic auto body parts. The compositions of US '192 comprise at least one non-oxidized, non-maleated, non-chlorinated, crystalline polyolefin; at least one non-chlorinated, maleated, amorphous polyolefin; at least one surfactant; at least one amine compound; and water. The compositions are useful as primers and as overcoats for auto body parts. US '192 does not disclose the use of the compositions to improve adhesion of printing inks on low treatment and/or difficult to print substrates.

Document WO 2017/011236 A1 is directed towards thermoformable printing inks. The specific examples of WO 2017/011236 A1 are finished inks comprising either a black, dark green, or green pigment. The inks may have compositional similarities to the primers for use in the invention, insofar as they both comprise a maleated type adhesion promotor . However, there is no suggestion in the document that the disclosed inks could be applied to and dried on a substrate act to act as a primers that is suitable for any ink, let alone flexographic printing of inks as required by claim 1 of the present invention. There is nothing in WO 2017/011236 A1 that would have provided a reasonable expectation that inks would adhere well to such a primer.

There is still a need for water-based primer compositions that can promote adhesion of water-based inks and coatings to low-treatment films.

### SUMMARY OF THE INVENTION

The invention is defined by the appended claims. The present invention provides a water-based primer composition that promotes adhesion of water-based inks and coatings to substrates, such as low-treatment films, to which water-based inks and coatings do not typically adhere well.

The present invention provides a method of printing comprising preparing a substrate to which water-based inks and coatings adhere well, comprising the steps of:
(i) providing a substrate selected from the group consisting of polyethylene, polypropylene, nylon, vinyl, polyvinylchloride, and polyethylene terephthalate;
(ii) providing a water-based primer composition comprising:
   (a) a maleated polyolefin type adhesion promoter; and
   (b) water; wherein the maleated polyolefin type adhesion promoter is chlorine-free; and with the proviso that the primer composition does not contain a non-oxidized, non-maleated, non-chlorinated, crystalline polyolefin;
(iii) applying a primer composition to the substrate;
(iv) drying the applied primer composition on the substrate; and then
(v) applying an ink on top of the primer using a flexographic press.

In one embodiment, the water-based primer composition for use in the present invention comprises 25 wt% to 100 wt% maleated polyolefin type adhesion promoter, based on the total weight of the primer composition.

In another embodiment, the water-based primer for use in the present invention promotes adhesion of water-based inks and coatings to the substrate.

These and other objects, advantages, and features of the invention will become apparent to those persons skilled in the art upon reading the details of the formulations and methods as more fully described below.

### DETAILED DESCRIPTION OF THE INVENTION

It is to be understood that the foregoing general description and the following detailed description are exemplary and explanatory only, and are not restrictive of any subject matter claimed.

Headings are used solely for organizational purposes, and are not intended to limit the invention in any way.

Unless otherwise defined, all technical and scientific terms used herein have the same meaning as is commonly understood by one of skill in the art to which the inventions belong. Although any methods and materials similar or equivalent to those described herein can be used in the practice or testing of the present invention, the preferred methods are described.

The present invention provides the method as defined in claim 1, comprising the step of applying water-based primer compositions comprising a chlorine-free, APEO-free, maleated polyolefin adhesion promoter to substrates. In certain embodiments, the maleated polyolefin adhesion promoters are free of any halogens. The primer compositions for use in the present invention promote the adhesion of water-based inks and coatings to substrates on which water-based inks and coatings normally do not adhere well, such as low-treatment films.

### Definitions

In this application, the use of the singular includes the plural unless specifically stated otherwise. As used herein, the singular forms "a," "an" and "the" are intended to include the plural forms as well, unless the context clearly indicates otherwise.

In this application, the use of "or" means "and/or" unless stated otherwise. Also, when it is clear from the context in which it is used, "and" may be interpreted as "or," such as in a list of alternatives where it is not possible for all to be true or present at once.

As used herein, the terms "comprises" and/or "comprising" specify the presence of the stated features, integers, steps, operations, elements, and/or components, but do not preclude the presence or addition of one or more other features, integers, steps, operations, elements, components, and/or groups thereof. Furthermore, to the extent that the terms "includes," "having," "has," "with," "composed," "comprised" or variants thereof are used in either the detailed description or the claims, such terms are intended to be inclusive in a manner similar to the term "comprising."

As used herein, ranges and amounts can be expressed as "about" a particular value or range. "About" is intended to also include the exact amount. Hence "about 5 percent" means "about 5 percent" and also "5 percent." "About" means within typical experimental error for the application or purpose intended.

It is to be understood that wherein a numerical range is recited, it includes the end points, all values within that range, and all narrower ranges within that range, whether specifically recited or not.

As used herein, "substrate" means any surface or object to which an ink or coating can be applied. Substrates include, but are not limited to, cellulose-based substrates, paper, paperboard, fabric, leather, textiles, felt, concrete, masonry, stone, plastic, plastic or polymer film, glass, ceramic, metal, wood, composites, combinations thereof, and the like. Substrates may have one or more layers of metals or metal oxides, or other inorganic materials.

As used herein, "low-treatment substrate" means a substrate that has a low surface tension. Surface tension affects the receptivity of the substrate to inks. Because of the low surface tension of low-treatment substrates, inks generally cannot adequately adhere to the surface of the substrate.

As used herein, the term "article" or "articles" means a substrate or product of manufacture. Examples of articles include, but are not limited to: substrates such as cellulose-based substrates, paper, paperboard, plastic, plastic or polymer film, glass, ceramic, metal, composites, and the like; and products of manufacture such as publications (e.g. brochures), labels, and packaging materials (e.g. cardboard sheet or corrugated board), containers (e.g. bottles, cans), a polyolefin (e.g. polyethylene or polypropylene), a polyester (e.g. polyethylene terephthalate), a metalized foil (e.g. laminated aluminum foil), metalized polyester, a metal container, and the like.

As used herein, "anilox cylinder" means a part on the printing press that transfers ink onto a printing plate, which then transfers an image onto the film or paper.

Throughout this disclosure, all parts and percentages are by weight (wt% or mass% based on the total weight) and all temperatures are in °C unless otherwise indicated.

### Water-based primers

Water-based inks and coatings normally do not adhere well to certain substrates, including polymer films, such as low-treatment films. Polymer films generally have a low surface energy, and are not receptive to bonding with water-based inks and coatings. Such films include polyethylene, polypropylene (e.g. biaxially-oriented polypropylene (BOPP)), nylon, vinyl, polyvinylchloride (PVC), polyethylene terephathalate (PET), etc. Generally, in order to get water-based inks and coatings to adhere to these substrates, the substrates must first be treated. Treatments include corona discharge, plasma treatment, and chemical treatment to increase the surface tension of the substrate. Advantageously, the water-based primers for use in the present invention aid in the adhesion of water-based inks and coatings to these polymer substrates, enabling the extra step of treating the substrates to be eliminated.

In the prior art, maleated polyolefin type adhesion promoters are typically added in small amounts to ink and coating compositions, for example no more than about 3 wt%, to aid in adhesion of the ink or coating composition to the substrate. The present invention is the first time that it has been shown that compositions containing high amounts of maleated polyolefin type adhesion promoters can be used as primer compositions to aid in the adhesion of water-based inks and coatings to certain substrates, such as polymer substrates having low surface energy.

The maleated polyolefin type adhesion promoter is used to provide primer compositions for use on films that are poorly treated or otherwise difficult to get inks to adhere to. The primer is then overprinted with one or more inks which would exhibit good adhesion. A preferred maleated polyolefin type adhesion promoter material is Advantis 510W (Eastman), which can be used at 100% concentration or cut with water at various concentrations and subsequently used as a primer on filmic substrates to provide improved adhesion for ink or coating layers printed over the top of the primer. This embodiment is further illustrated in Examples 1A to 1D. In addition to providing improved adhesion, the primers would be water-based and non-flammable for safer use vs. solvent-based primers.

The water-based primers for use in the present invention comprise maleated polyolefin type adhesion promoters. Chlorinated maleated polyolefin promoters include AdvaBond 7200 (Advanced Polymer, Inc.) The maleated polyolefins for use in the invention are chlorine-free and preferably APEO-free. In preferred embodiments, the maleated polyolefins are free of any halogens. An example of a suitable maleated polyolefin type adhesion promoter is Advantis^{™} 510W, from Eastman Chemical Company.

The maleated water-based primer compositions for use in the present invention typically contain about 25 wt% to about 100 wt% maleated polyolefin type adhesion promoter based on the total weight of the primer composition. For example, the water-based primer compositions for use in the present invention may contain about 25 wt% to about 95 wt% maleated polyolefin type adhesion promoter, based on the total weight of the primer composition; or about 25 wt% to about 90 wt%; or about 25 wt% to about 85 wt%; or about 25 wt% to about 80 wt%; or about 25 wt% to about 75 wt%; or about 25 wt% to about 70 wt%; or about 25 wt% to about 65 wt%; or about 25 wt% to about 60 wt%; or about 25 wt% to about 55 wt%; or about 25 wt% to about 50 wt%; or about 25 wt% to about 45 wt%; or about 25 wt% to about 40 wt%; or about 25 wt% to about 35 wt%; or about 25 wt% to about 30 wt%.

The water-based primer compositions for use in the invention also contain water in addition to any present in the maleated polyolefin resin. When present, the added water is typically present in an amount of about 10 wt% to about 75 wt%, based on the total weight of the primer composition. For example, water may be present in an amount of about 10 wt% to about 70 wt%, based on the total weight of the primer composition; or about 10 wt% to about 65 wt%; or about 10 wt% to about 60 wt%; or about 10 wt% to about 55 wt%; or about 10 wt% to about 50 wt%; or about 10 wt% to about 45 wt%; or about 10 wt% to about 40 wt%; or about 10 wt% to about 35 wt%; or about 10 wt% to about 30 wt%; or about 10 wt% to about 25 wt%; or about 10 wt% to about 20 wt%; or about 10 wt% to about 15 wt%.

The primers for use in the present invention may optionally comprise colorants. Suitable colorants include, but are not limited to, organic or inorganic pigments and dyes. The dyes include but are not limited to fluorescent dyes, azo dyes, anthraquinone dyes, xanthene dyes, azine dyes, combinations thereof and the like. Organic pigments may be one pigment or a combination of pigments, such as for instance Pigment Yellow Numbers 12, 13, 14, 17, 74, 83, 114, 126, 127, 174, 188; Pigment Red Numbers 2, 22, 23, 48:1, 48:2, 52, 52:1, 53, 57:1, 112, 122, 166, 170, 184, 202, 266, 269; Pigment Orange Numbers 5, 16, 34, 36; Pigment Blue Numbers 15, 15:3, 15:4; Pigment Violet Numbers 3, 23, 27; and/or Pigment Green Number 7. Inorganic pigments may be one of the following non-limiting pigments: iron oxides, titanium dioxides, chromium oxides, ferric ammonium ferrocyanides, ferric oxide blacks, Pigment Black Number 7 and/or Pigment White Numbers 6 and 7. Other organic and inorganic pigments and dyes can also be employed, as well as combinations that achieve the colors desired. In one embodiment, the colorant would be a pigment dispersed in an acrylic resin.

When present, colorants can be included in an amount up to about 50 wt%, based on the total weight of the primer composition. For example, colorants may be present in an amount of about 1 wt% to about 50 wt%, based on the total weight of the primer composition; or about 1 wt% to about 40 wt%; or about 1 wt% to about 30 wt%; or about 1 wt% to about 20 wt%; or about 1 wt% to about 10 wt%.

The water-based primers for use in the present invention may optionally contain a silicone compound. When present, the silicone compound may be present in an amount of about 0.1 wt% to about 1.0 wt%. Preferably, the water-based primers for use in the present invention do not contain any silicone compounds. Advantageously, without the use of the silicone, the primers for use in the present invention provide product performance equal to commercially available primers for the same end use.

The primers for use in the present invention may optionally comprise waxes, such as, but not limited to, amide wax, erucamide wax, polypropylene wax, paraffin wax, polyethylene wax, teflon, carnuba wax and the like. The wax may be a combination of said waxes. A preferred material is polytetrafluoroethylene Teflon wax, e.g. SST-3 (Shamrock). When present, waxes are typically present in an amount of up to 5 wt%, based on the total weight of the primer composition. For example, the waxes may be present in an amount of about 0.1 wt% to about 5 wt%, based on the total weight of the primer composition; or about 0.1 wt% to about 4.5 wt%; or about 0.1 wt% to about 4 wt%; or about 0.1 wt% to about 3.5 wt%; or about 0.1 wt% to about 3 wt%; or about 0.1 wt% to about 2.5 wt%; or about 0.1 wt% to about 2 wt%; or about 0.1 wt% to about 1.5 wt%; or about 0.1 wt% to about 1 wt%; or about 0.1 wt% to about 0.5 wt%.

The primers for use in the present invention may optionally comprise one or more crosslinkers, including, but not limited to, metal oxide crosslinkers, such as a zinc oxide crosslinker. When present, the crosslinkers are present in an amount of about 0.1 wt% to about 5 wt%, based on the total weight of the primer composition; or about 0.1 wt% to about 4.5 wt%; or about 0.1 wt% to about 4 wt%; or about 0.1 wt% to about 3.5 wt%; or about 0.1 wt% to about 3 wt%; or about 0.1 wt% to about 2.5 wt%; or about 0.1 wt% to about 2 wt%; or about 0.1 wt% to about 1.5 wt%; or about 0.1 wt% to about 1 wt%; or about 0.1 wt% to about 0.5 wt%.

In certain preferred embodiments, the water-based primer compositions for use in the invention may also comprise one or more acrylic emulsions. Suitable acrylic emulsions include, but are not limited to, Joncryl 585, Joncryl 1620, Joncryl 1695, and Joncryl 1650 (BASF); LPV-1002 (KC Colors); Vancryl K762 (Allnes); Rhoplex I-2184, and Rhoplex I-545 (DOW); and Neocryl BT-101 (DSM). Preferably, the acrylic emulsion is a styrene-acrylic emulsion, such as LPV-1002 (KC Colors). When present, acrylic emulsions are typically included in an amount of about 1 wt% to about 60 wt%, based on the total weight of the primer composition; or about 1 wt% to about 55 wt%; or about 1 wt% to about 50 wt%; or about 1 wt% to about 45 wt%; or about 1 wt% to about 40 wt%; or about 1 wt% to about 35 wt%; or about 1 wt% to about 30 wt%; or about 1 wt% to about 25 wt%; or about 1 wt% to about 20 wt%; or about 1 wt% to about 15 wt%; or about 1 wt% to about 10 wt%; or about 1 wt% to about 5 wt%.

For example, the water-based primer compositions for use in the present invention may comprise:
(a) 25 wt% to 90 wt% polyolefin adhesion promoter, which is a maleated polyolefin type adhesion promoter;
(b) 10 wt% to 75 wt% water;
(c) 1 wt% to 60 wt% one or more acrylic emulsions, preferably at least one of which is a styrene-acrylic emulsion;
(d) 0 wt% to 5 wt% crosslinker (preferred materials are zinc oxide crosslinkers, such as Liquidlike 901 (Lubrizol));
(e) 0 wt% to 5 wt% wax (a preferred material is polytetrafluoroethylene Teflon wax, e.g. SST-3 (Shamrock)); and
(f) 0 wt% to 50 wt% pigment dispersion (e.g. Flexiverse from Sun Chemical).

Other components may optionally include one or more organic or inorganic pigments or dyes, pigment dispersants, defoamers and surfactants; one or more additional polymers selected from the group consisting of alkyd, rosinated alkyd, polyester, acrylic, melamine-formaldehyde, urea-formaldehyde, polyester-urethane and urethane; and one or more oxygen-containing water-tolerant solvents such as 1-propoxy-2-propanol, n-propanol, isopropanol, ethyl alcohol and other lower alcohols. These solvents may be used to adjust drying speed and also to add in foam control.

Additional polymers may optionally be included in the ink formulations to improve wet ink film properties like wetting and flow and/or dry film properties like gloss, adhesion and rub and mar resistance.

The primers for use in the present invention, and the inks printed thereon, preferably provide heat resistance, impact resistance, and resistance to cracking upon elongation of the film. The primer and inks for use in the present invention are designed for applications that require good machining properties involved with the printing of packaging labels, but may also be used for other applications that require similar ink properties.

The chemistry underlying the primers for use in the present invention is different to that known in the art. The formulations of the primers for use in the present invention are a combination of a maleated polyolefin resin, and water. A cross-linkable acrylic emulsion, a pH sensitive crosslinker, additives for jaw release, and acrylic resins as dispersants for pigments, may also be incorporated, depending on the end-use. Jaw release refers to the ability of the primer on the printed substrate to release from the metal component of equipment used to seal pieces of the printed material together, or used in the molding of this material into different shapes. Examples would be sealing a polyethylene lined bag like a potato chip bag or the molding of a piece of plastic into a cup or lid. Good jaw release means no sticking, or minimal sticking occurs.

The vehicle used for the water-based inks intended for application to films used in packaging labels and bags is preferably comprised of two acrylic emulsion polymers, polytetrafluoroethylene powder, a silicone compound, zinc oxide crosslinker, defoamer and water. This blend vehicle is then preferably blended with dispersions made with acrylic resin solution at a level of 0.1% - 70% dispersion and vehicle at a level of 30% - 99.9% vehicle to form a finished ink or coating.

The vehicle is blended with colorants to make finished inks. Preferably the colorant will be in the form of an acrylic resin dispersion, but could also be in the form of one or more dispersions based on different resins, one or more dyes, one or more surfactant-based materials, one or more dry organic or inorganic pigments, or a combination thereof.

The finished ink printed on top of the primer is applied using a flexographic press on low treatment film. Inks may be applied at a coating weight ranging from 0.3 - 2.0 pounds per ream using a photopolymer or SBR printing plate.

### EXAMPLES

The following examples illustrate specific aspects of the present invention, and are not intended to limit the scope thereof in any respect, and should not be so construed.

The primers for use in the present invention were tested on BOPP rice bags that cannot be print treated and cannot be printed with solvent-based inks. Prior to the present invention, there was no known way to achieve adhesion of inks and coatings to these bags with or without primers.

### Methods

### Application of primer composition

BOPP film was cut into four, 8x4 inch strips, and then printed with the Example 1A to 1D primers using a 6.8 BCM anilox cylinder. Prints with primer were aged in a 50°C oven for 1 hour before being printed with water-based inks.

### Overprinting of substrates

Water-based inks were printed on the substrates comprising the primer composition, and on comparative substrates without the primer composition. The prints were aged in a 50°C oven for 1 hour before being tested for ink adhesion.

### Tape adhesion

Adhesion of the inks was tested using a 4-inch strip of 610 tape. The tacky side of the tape was placed flat on the surface of the printed substrate. The tape was then ripped from the print and examined for ink transfer from the surface. Ink removal was assessed on a scale of 1 to 10, wherein 1 indicates total ink removal, 5 indicates moderate ink removal, and 10 indicates no ink removal.

### Examples 1A to 1D. Adhesion of water-based inks to primed substrates.

Primers with varying amounts of a maleated polyolefin type adhesion promoter (Advantis 510W) and water were prepared and applied to substrates. The formulations of primers 1A to 1D are shown in Table 1.

**Table 1. Primer formulations**

| | **Ex. 1A (wt%)** | **Ex. 1B (wt%)** | **Ex. 1C (wt%)** | **Ex. 1D (wt%)** |
|---|---|---|---|---|
| Maleated polyolefin | 100 | 75 | 50 | 25 |
| Water | 0 | 25 | 50 | 75 |
| **Total** | **100** | **100** | **100** | **100** |

The substrates were overprinted with the following water-based inks, all from Sun Chemical:
**Ink A -** 50% PMBFW0591224:AQUAKING MP 50% GCD9628
**Ink B -** GA64400066:AR III 186U RED with PMA023 CCLV VEHICLE used in place of PMBFW0591111: WB ARIII VEHICLE-MOD
**Ink C** - GA64400066:AR III 186U RED with TV94-5865:SSD00333F/B used in place of PMBFW0591111: WB ARIII VEHICLE-MOD
**Ink D** - 60% TXOFW0838989:OD KRAUF VEHICLE 40%GCD9628

Results of the tape adhesion test are shown in Table 2.

**Table 2. Tape adhesion of over-printed inks.**

| | **No Primer** | **Ex. 1A Primer** | **Ex. 1B Primer** | **Ex. 1C Primer** | **Ex. 1D Primer** |
|---|---|---|---|---|---|
| **Ink A** | 2 | 10 | 10 | 10 | 7 |
| **Ink B** | 1 | 6 | 5 | 10 | 3 |
| **Ink C** | 1 | 10 | 10 | 4 | 7 |
| **Ink D** | 1 | 10 | 10 | 10 | 6 |

The data in Table 2 clearly illustrates the advantage of the primers for use in the present invention to improve adhesion of water based inks to low-treatment substrates. The primers for use in the present invention provided improved adhesion with as little as 25 wt% of the maleated polyolefin type adhesion promoter diluted with 75% water.

The present invention has been described in detail, including the preferred embodiments thereof. However, it will be appreciated that those skilled in the art, upon consideration of the present disclosure, may make modifications and/or improvements on this invention that fall within the scope of the invention.

## Claims

1. A method of printing comprising preparing a substrate to which water-based inks and coatings adhere well, comprising the steps of:
(i) providing a substrate selected from the group consisting of polyethylene, polypropylene, nylon, vinyl, polyvinylchloride, and polyethylene terephthalate;
(ii) providing a water-based primer composition comprising:
(a) a maleated polyolefin type adhesion promoter; and
(b) water; wherein the maleated polyolefin type adhesion promotor is chlorine-free; and with the proviso that the primer composition does not contain a non-oxidized, non-maleated, non-chlorinated, crystalline polyolefin;
(iii) applying the primer composition to the substrate;
(iv) drying the applied primer composition on the substrate; and then
(v) applying an ink on top of the primer using a flexographic press.

2. The method of claim 1, wherein the maleated polyolefin type adhesion promoter is alkylphenolethoxylate (APEO)-free.

3. The method of claims 1 or 2, wherein the maleated polyolefin type adhesion promoter is halogen-free.

4. The method of any preceding claim, wherein the primer composition further comprises one or more of the following: one or more acrylic resin emulsions; and/or one or more colorants; and/or one or more crosslinkers; and/or one or more waxes.

5. The method of claim 4, wherein at least one acrylic emulsion is a styrene-acrylic emulsion.

6. The method of any preceding claim, wherein the primer composition further comprises one or more of the following: one or more defoamers; one or more surfactants; one or more additional polymers; or one or more oxygen containing water-tolerant solvents selected from the group consisting of 1-propoxy-2-propanol, n-propanol, isopropanol, and ethyl alcohol.

7. The method of claim 6, wherein the additional polymers are selected from alkyd, rosinated alkyd, polyester, acrylic, melamine-formaldehyde, urea-formaldehyde, polyester-urethane, and urethane.

## Patentansprüche

1. Verfahren zum Drucken, umfassend Vorbereiten eines Substrats, auf dem Tinten und Beschichtungen auf Wasserbasis gut haften, umfassend die Schritte:
(i) Bereitstellen eines Substrats ausgewählt aus der Gruppe bestehend aus Polyethylen, Polypropylen, Nylon, Vinyl, Polyvinylchlorid, und Polyethylenterephthalat;
(ii) Bereitstellen einer Grundierungszusammensetzung auf Wasserbasis umfassend:
(a) einen Haftvermittler vom Maleiertes-Polyolefin-Typ; und
(b) Wasser; wobei der Haftvermittler vom Maleiertes-Polyolefin-Typ chlorfrei ist; und mit der Maßgabe, dass die Grundierungszusammensetzung kein nicht-oxidiertes, nicht-maleiertes, nicht-chloriertes, kristallines Polyolefin enthält;
(iii) Aufbringen der Grundierungszusammensetzung auf das Substrat;
(iv) Trocknen der aufgebrachten Grundierungszusammensetzung auf dem Substrat; und dann
(v) Aufbringen einer Tinte auf die Grundierung unter Verwendung einer Flexodruckpresse.

2. Verfahren nach Anspruch 1, wobei der Haftvermittler vom Maleiertes-Polyolefin-Typ Alkylphenolethoxylat(APEO)-frei ist.

3. Verfahren nach Anspruch 1 oder 2, wobei der Haftvermittler vom Maleiertes-Polyolefin-Typ halogenfrei ist.

4. Verfahren nach einem der vorstehenden Ansprüche, wobei die Grundierungszusammensetzung ferner eines oder mehrere der Folgenden umfasst: eine oder mehrere Acrylharzemulsionen; und/oder einen oder mehrere Farbstoffe; und/oder einen oder mehrere Vernetzer; und/oder ein oder mehrere Wachse.

5. Verfahren nach Anspruch 4, wobei wenigstens eine Acrylemulsion eine Styrol-Acryl-Emulsion ist.

6. Verfahren nach einem der vorstehenden Ansprüche, wobei die Grundierungszusammensetzung ferner eines oder mehrere der Folgenden umfasst: einen oder mehrere Entschäumer; ein oder mehrere Tenside; ein oder mehrere zusätzliche Polymere; oder ein oder mehrere sauerstoffhaltige wassertolerante Lösungsmittel ausgewählt aus der Gruppe bestehend aus 1-Propoxy-2-propanol, n-Propanol, Isopropanol und Ethylalkohol.

7. Verfahren nach Anspruch 6, wobei die zusätzlichen Polymere ausgewählt sind aus Alkyd, rosiniertem Alkyd, Polyester, Acryl, Melamin-Formaldehyd, Harnstoff-Formaldehyd, Polyester-Urethan und Urethan.

## Revendications

1. Procédé d'impression comprenant la préparation d'un substrat auquel des encres et des revêtements à base d'eau adhèrent bien, comprenant les étapes de :
(i) fourniture d'un substrat choisi dans un groupe constitué du polyéthylène, du polypropylène, du nylon, du vinyle, du polychlorure de vinyle et du poly(téréphtalate d'éthylène) ;
(ii) fourniture d'une composition d'apprêt à base d'eau comprenant :
(a) un promoteur d'adhérence de type polyoléfine maléatée ; et
(b) de l'eau ; dans laquelle le promoteur d'adhérence de type polyoléfine maléatée est exempt de chlore ; et à condition que la composition d'apprêt ne contienne pas de polyoléfine cristalline non oxydée, non maléatée et non chlorée ;
(iii) application de la composition d'apprêt sur le substrat ;
(iv) séchage de la composition d'apprêt appliquée sur le substrat ; et ensuite
(v) application d'une encre par-dessus l'apprêt en utilisant une presse flexographique.

2. Procédé selon la revendication 1, dans lequel le promoteur d'adhérence de type polyoléfine maléatée est exempt d'alkylphénoléthoxylate (APEO).

3. Procédé selon la revendication 1 ou 2, dans lequel le promoteur d'adhérence de type polyoléfine maléatée est exempt d'halogène.

4. Procédé selon l'une quelconque des revendications précédentes, dans lequel la composition d'apprêt comprend en outre un ou plusieurs des éléments suivants : une ou plusieurs émulsions de résine acrylique ; et/ou une ou plusieurs matières colorantes ; et/ou un ou plusieurs agents de réticulation ; et/ou une ou plusieurs cires.

5. Procédé selon la revendication 4, dans lequel au moins une émulsion acrylique est une émulsion styrène-acrylique.

6. Procédé selon l'une quelconque des revendications précédentes, dans lequel la composition d'apprêt comprend en outre un ou plusieurs des éléments suivants : un ou plusieurs agents antimousses ; un ou plusieurs tensioactifs ; un ou plusieurs polymères supplémentaires ; ou un ou plusieurs solvants hydrorésistants contenant de l'oxygène choisis dans un groupe constitué du 1-propoxy-2-propanol, du n-propanol, de l'isopropanol et de l'alcool éthylique.

7. Procédé selon la revendication 6, dans lequel les polymères supplémentaires sont choisis parmi un alkyde, un alkyde rosiné, un polyester, un acrylique, un mélamine-formaldéhyde, un urée-formaldéhyde, un polyester-uréthane et un uréthane.
